# FASCICULE DE BREVET EUROPEEN

(11) **EP 3 241 799 B1**
(45) Date de publication et mention de la délivrance du brevet: **25.12.2019**
(21) Numéro de dépôt: 17168870.8
(22) Date de dépôt: 28.04.2017
(51) Int. Cl.: B66C 23/18, B66C 23/26, H02G 7/18

(54) **DISPOSITIF ET PROCÉDÉ DE PROTECTION D'UN TERRAIN LORS DE TRAVAUX DE MAINTENANCE SUR DES LIGNES ÉLECTRIQUES AÉRIENNES**
VORRICHTUNG UND VERFAHREN ZUM SCHUTZ EINES GELÄNDES BEI DURCHFÜHRUNG VON WARTUNGS- UND INSTANDHALTUNGSARBEITEN AN ELEKTRISCHEN OBERLEITUNGEN
DEVICE AND METHOD FOR PROTECTING A FIELD DURING MAINTENANCE WORK ON OVERHEAD POWER LINES

(30) Priorité: 04.05.2016 FR 1654089
(43) Date de publication de la demande: 08.11.2017
(73) Titulaire: Vayssade, Fabrice, 38240 Meylan (FR)
(72) Inventeur: Vayssade, Fabrice, 38240 Meylan (FR)
(74) Mandataire: Talbot, Alexandre

(56) Documents cités:
- CN-U- 203 813 323
- FR-A1- 2 967 526
- GB-A- 2 299 351

## Description

### Domaine technique de l'invention

L'invention est relative à un dispositif de protection d'un terrain, notamment lors de travaux de maintenance de lignes électriques aériennes passant au-dessus dudit terrain.

### État de la technique

Les lignes aériennes haute tension et/ou moyenne tension d'un réseau de distribution de l'énergie électrique acheminent l'énergie électrique sur de longues distances. Ainsi, ces lignes aériennes traversent plusieurs sortes de terrains pouvant comporter une portion d'une route, d'une autoroute, d'une voie ferrée, ou encore un ouvrage. Lors d'un montage et/ou d'une maintenance de ces lignes aériennes aux points d'intersection avec ces terrains, un problème est rencontré. Il est lié à la sécurité des personnes et/ou des installations pouvant être situés dans ces terrains.

Pour des raisons de sécurité, il est souhaitable et parfois exigé soit d'interrompre l'activité dans les terrains traversés par ces lignes aériennes, soit les protéger au cours des opérations de montage ou de maintenance.

Une interruption de l'activité peut s'avérer gênante pour les personnes et pénalisante, d'un point de vue financier, pour l'exploitant de ces installations.

Le document FR2967526 décrit une installation de protection qui comporte une grue à tour munie d'une flèche pourvue de tiges horizontales perpendiculaires. La grue à tour pivote au-dessus de la zone à protéger jusqu'à ce que la flèche repose sur un mât.

### Objet de l'invention

Lors de certaines opérations de montage et/ou de maintenance de lignes électriques aériennes, il existe un besoin de fournir un dispositif et un procédé de protection d'un terrain pouvant être mis en œuvre rapidement et facilement pour sécuriser de manière robuste et efficace ledit terrain comportant par exemple une portion d'une voie ou une installation, sans interrompre son activité normale.

On tend vers cet objectif en prévoyant un dispositif de sécurisation d'un terrain comportant :
- une grue à tour munie d'un mât et d'une flèche s'étendant selon un axe longitudinal et comportant des première et deuxième extrémités opposées selon l'axe longitudinal ;
- des tiges transversales montées sur la flèche ;
- des moyens d'accrochage disposés à la deuxième extrémité et configurés pour coopérer avec un câble ;
- des moyens de fixation configurés pour attacher le câble à un point d'appui fixe, le câble reliant la flèche via les moyens d'accrochage et le point d'appui fixe via les moyens de fixation.

On prévoit également un procédé de sécurisation d'un terrain, comportant les étapes suivantes :
- prévoir une grue à tour comportant :
   - un mât ;
   - une flèche s'étendant selon un axe longitudinal et comportant des première et deuxième extrémités opposées selon l'axe longitudinal, la flèche étant disposée sur le mât au niveau d'un point d'assemblage proximal par rapport à la première extrémité et distal par rapport à la deuxième extrémité ;

   - des tiges transversales montées sur la flèche et distribuées entre les première et deuxième extrémités ;
- monter la grue à tour à un premier côté du terrain, puis pivoter la grue à tour de sorte que la flèche s'étende au-dessus du terrain ;
- haubaner la flèche au niveau de la deuxième extrémité.

De manière avantageuse, l'étape d'haubanage consiste à relier la flèche au niveau de la deuxième extrémité à un point d'appui fixe placé à un deuxième côté du terrain via au moins un câble détendu.

### Description sommaire des dessins

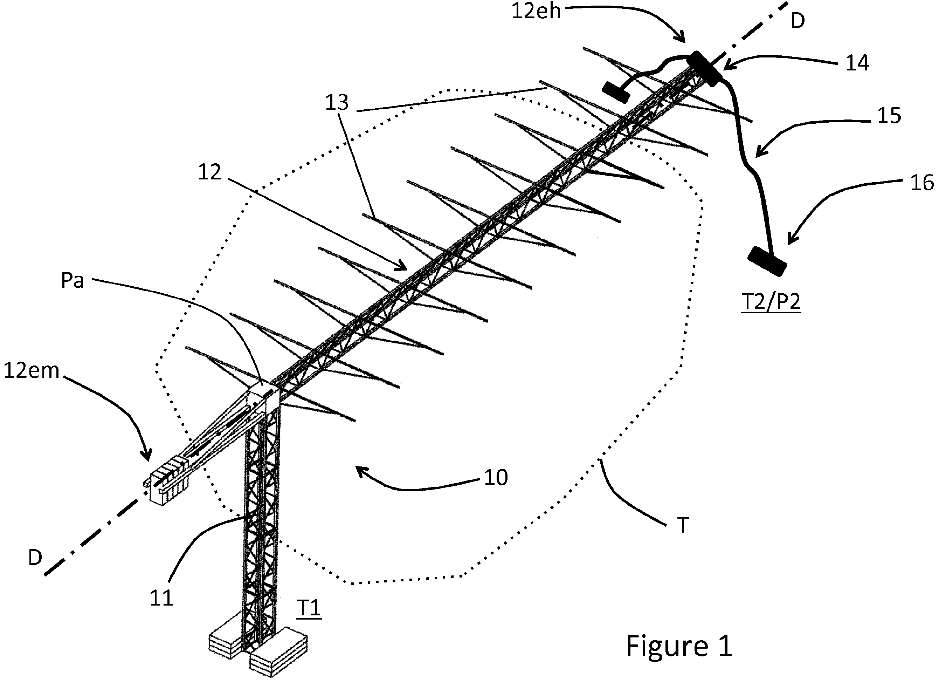

D'autres avantages et caractéristiques ressortiront plus clairement de la description qui va suivre de modes particuliers de réalisation de l'invention donnés à titre d'exemples non limitatifs et représentés au dessin annexé, dans lequel la figure 1 représente une vue en perspective schématique d'un dispositif de sécurisation.

### Description de modes préférentiels de réalisation

Pour assurer une protection et sécuriser un terrain comportant une portion d'une voie ou une installation en toutes circonstances, notamment lors de travaux de maintenance de lignes électriques aériennes, il est avantageux d'utiliser un dispositif solide pouvant être installé de manière facile et rapide. On tend à satisfaire ces exigences en prévoyant un dispositif de protection tirant profit de la robustesse d'une grue à tour améliorée.

La figure 1 représente une vue en perspective d'un dispositif de sécurisation d'un terrain T comportant principalement une grue à tour 10 optimisée et améliorée. En effet, les grues à tour sont réputées pour leur robustesse et leur facilité de montage. Le dispositif de sécurisation bénéficie des avantages procurés par les éléments d'une grue à tour.

Par ailleurs, par « grue à tour » on entend une grue assemblée sur place, notamment à l'aide d'éléments mécano soudés préfabriqués.

De manière préférentielle, la grue à tour 10 est une grue à tour sans tirant. La grue à tour 10 comporte deux éléments essentiels : un mât 11 et une flèche 12. Le mât 11 et la flèche 12 sont préférentiellement en treillis acier et sont formés de plusieurs éléments mécano soudés de dimensions identiques ou variables.

Le mât 11 supporte la flèche 12, et il est préférentiellement stabilisé à l'aide de lests, pouvant comprendre plusieurs blocs en béton. Par ailleurs, le mât 11 peut être stabilisé par ancrage ou haubanage pour améliorer sa stabilité et limiter les phénomènes de torsion et de flambement, pouvant s'accentuer lors d'un vent fort. Le mât peut atteindre une hauteur de 40 mètres.

La flèche 12 s'étend le long d'un axe longitudinal D et comporte des première 12em et deuxième 12eh extrémités opposées selon l'axe longitudinal D. La flèche 12 est configurée pour être assemblée et montée à pivotement sur le mât 11 au niveau d'un point d'assemblage Pa proximal par rapport à la première extrémité 12em et distal par rapport à la deuxième extrémité 12eh. La flèche 12 comporte une contre-flèche formée par le tronçon de la flèche compris entre la première extrémité 12em et le point d'assemblage Pa. La contre-flèche supporte préférentiellement au niveau de son extrémité 12em un contrepoids formé par des blocs de béton qui assure l'équilibre et la stabilité de la flèche 12.

Une grue à tour conventionnelle a pour principale fonction, le levage et le déplacement des charges lourdes et encombrantes dans un chantier. Selon l'invention, la fonction de la grue à tour est avantageusement détournée pour former une protection du terrain T, notamment pour récupérer des lignes électriques aériennes et les empêcher d'atterrir sur le terrain T. Avantageusement, la flèche 12 est équipée de tiges transversales 13.

Les tiges 13 sont préférentiellement montées sur la partie supérieure de la flèche 12. De manière préférentielle, les tiges 13 sont parallèles et sont distribuées sur toute la longueur de la flèche 12. Les tiges peuvent être montées sur la flèche 12 de sorte qu'elles soient régulièrement espacées selon l'axe longitudinal D. Préférentiellement, les tiges 13 ont une longueur comprise entre 2 et 20 mètres, et selon l'application visée, les tiges peuvent atteindre une longueur de 25 mètres.

Ainsi, l'ensemble flèche 12 et tiges 13 forme une ossature d'une surface de réception s'interposant avantageusement entre des lignes aériennes ou autres objets et le terrain T. Cette ossature peut comporter des moyens de couvertures, tels que des filets, des plaques, etc.

La longueur de la flèche 11 est avantageusement choisie en fonction des dimensions du terrain, ainsi que des caractéristiques des objets à récupérer, notamment leurs dimensions et leurs poids. Préférentiellement, la longueur de la flèche est comprise entre 20 et 80 mètres.

Selon un mode de réalisation, les tiges 13 sont montées sur la flèche 12 de sorte que lorsque la flèche 12 est montée sur le mât 11 et est disposée à l'horizontale, les tiges 13 sont disposées au-dessus du plan horizontal comportant la flèche 12. Par ailleurs, les tiges 13 peuvent être reliées à la flèche 12 et/ou entre elles à l'aide de tirants pour renforcer le maintien latéral.

Grâce à la flèche 12 optimisée, on forme avantageusement une protection suspendue du terrain T montée à pivotement sur le mât 11. La robustesse et la solidité du mât 11 et de la flèche 12 d'une grue à tour permettent avantageusement à la flèche 12 de supporter des lignes aériennes même en opérant en flexion.

En outre, la flèche 12 comporte des moyens d'accrochage 14 disposés au niveau de la deuxième extrémité 12eh. Les moyens d'accrochage 14 peuvent également être disposés sur la flèche en amont de la deuxième extrémité 12eh. Par exemple, ces moyens 14 peuvent être placés à une distance comprise entre 50 cm et 5 m, en amont de la deuxième extrémité 12eh. Les moyens d'accrochage 14 sont configurés pour coopérer avec un câble 15, et des moyens de fixation 16 pour haubaner la flèche 12 et empêcher la grue à tour optimisée d'être en mode « girouette » pendant la protection du terrain T.

Les moyens de fixation 16 sont configurés pour attacher le câble 15 à un point d'appui fixe P2, préférentiellement placé à proximité du terrain T. Les moyens de fixation 16 peuvent comporter un contrepoids, ou des lests munis d'un ou plusieurs blocs en béton. Le câble 15 est configuré pour relier la flèche 12 via les moyens d'accrochage 14 et le point d'appui fixe P22 via les moyens de fixation 16.

Ainsi, le dispositif de sécurisation selon l'invention s'affranchit avantageusement de l'utilisation d'un élément de support destiné à supporter la flèche au niveau de sa deuxième extrémité, et empêcher la grue à tour d'être en mode « girouette ». Même en l'absence de ce type d'élément de support, le dispositif tire profit de la robustesse des éléments d'une grue à tour pour prévoir un dispositif de sécurisation d'un terrain fiable et solide, tout en assurant la stabilité du dispositif en haubanant la flèche de la grue à tour pour l'empêcher de pivoter pendant la protection du terrain. L'opération d'haubanage de la flèche est facile à réaliser et peut être effectuée quelle que soit la nature du terrain à protéger. Contrairement à l'installation d'un élément du support qui doit prendre en considération la nature du terrain sur lequel l'élément de support doit être installé pour assurer la stabilité du dispositif de sécurisation. Ce qui permet d'accélérer le montage, l'installation et le démontage du dispositif de sécurisation selon l'invention.

On prévoit également un procédé de sécurisation d'un terrain T en utilisant une grue à tour optimisée telle que décrite ci-dessus.

Le procédé prévoit l'utilisation d'une grue à tour 10 comportant un mât 11, et une flèche 12 s'étendant selon un axe longitudinal D et comportant des première 12em et deuxième 12eh extrémités opposées selon l'axe longitudinal D. La flèche 12 est disposée sur le mât 11. En fait, la flèche 12 est montée à pivotement sur le mât 11 au niveau d'un point d'assemblage Pa proximal par rapport à la première extrémité 12em et distal par rapport à la deuxième extrémité 12eh.

La grue à tour 10 comporte également des tiges transversales 13 montées sur la flèche 12 et distribuées entre les première 12em et deuxième 12eh extrémités.

La grue à tour 10 est montée et assemblée à un premier côté T1 du terrain T. Ensuite, la grue à tour 10 pivote, autrement dit, la flèche 12 pivote autour du mât 11 de sorte que la flèche 12 s'étende et soit disposée au-dessus du terrain T à protéger.

Le procédé comporte avantageusement une étape consistant à haubaner la flèche 12 au niveau de la deuxième extrémité 12eh.

Dans le domaine des grues à tour, il est classique d'haubaner le mât pour augmenter la stabilité de la grue. Lors de l'utilisation de la grue, la flèche se trouve dans un état de flexion. Pour assurer la stabilité de la flèche, la contre-flèche comporte généralement un contrepoids.

Le procédé selon l'invention, utilise une grue à tour de façon inattendue : on détourne la fonction du levage de la grue, en outre, on haubane la flèche, malgré sa flexion.

En effet, puisque la grue n'est pas destinée à la fonction du levage, la flexion de la flèche n'est pas importante. Par ailleurs, la flèche selon l'invention est configurée pour recevoir des lignes électriques par exemple en cas d'incident ou encore pour les remplacer, ainsi le poids de ces lignes est réparti sur la longueur de la flèche, et il n'est pas concentré sur un seul point de la flèche.

Ainsi, et de manière inattendue, il s'avère que l'utilisation uniquement des éléments de la grue à tour, en s'affranchissant d'un support de la flèche au niveau de la deuxième extrémité, permet d'obtenir un dispositif de sécurisation du terrain T stable et robuste qui accomplit sa fonction de protection en toute sécurité. L'haubanage de la flèche qui est également une opération inattendue dans le domaine des grues à tour, permet de sécuriser le dispositif pendant l'opération de protection du terrain T.

Selon un mode de réalisation, l'étape d'haubanage consiste à relier la flèche 12 au niveau de la deuxième extrémité 12eh à un point d'appui P2 fixe placé à un deuxième côté T2 du terrain T via au moins un câble 15 détendu. Par un câble détendu, on entend un câble qui n'est pas tendu et n'applique pas une force autre que son poids à la flèche. Préférentiellement, on utilise deux câbles pour réaliser un haubanage en « V » renversé comme illustré sur la figure 1.

Avantageusement, l'haubanage de la flèche 12 selon l'invention ne fait pas subir une flexion supplémentaire à la flèche. Il s'agit uniquement d'une mesure de sécurité destinée à renforcer la sécurité de la grue à tour pour ne pas se mettre en mode « girouette ». Autrement dit, la fonction du ou des câbles consiste à empêcher un pivotement non souhaité de la flèche 12.

## Revendications

1. Procédé de sécurisation d'un terrain (T), **caractérisé en ce qu'**il comporte les étapes suivantes :
- prévoir une grue à tour (10) comportant :
• un mât (11) ;
• une flèche (12) s'étendant selon un axe longitudinal (D) et comportant des première (12em) et deuxième (12eh) extrémités opposées selon l'axe longitudinal (D), la flèche (12) étant disposée sur le mât (11) au niveau d'un point d'assemblage (Pa) proximal par rapport à la première extrémité (12em) et distal par rapport à la deuxième extrémité (12eh) ;
• des tiges transversales (13) montées sur la flèche (12) et distribuées entre les première (12em) et deuxième (12eh) extrémités ;
- monter la grue à tour (10) à un premier côté (T1) du terrain (T), puis pivoter la grue à tour (10) de sorte que la flèche (12) s'étende au-dessus terrain (T) ;
procédé **caractérisé en ce qu'**il comporte :
- haubaner la flèche (12) au niveau de la deuxième extrémité (12eh).

2. Procédé selon la revendication 1, **caractérisé en ce que** l'étape d'haubanage consiste à relier la flèche (12) au niveau de la deuxième extrémité (12eh) à un point d'appui (P2) fixe placé à un deuxième côté (T2) du terrain (T) via au moins un câble (15) détendu.

3. Dispositif de sécurisation d'un terrain (T) comportant :
- Une grue à tour (10) munie d'un mât (11) et d'une flèche (12) s'étendant selon un axe longitudinal (D) et comportant des première (12em) et deuxième (12eh) extrémités opposées selon l'axe longitudinal (D) ;
- des tiges transversales (13) montées sur la flèche (12) ;
dispositif de sécurisation **caractérisé en ce qu'**il comporte :
- des moyens d'accrochage (14) disposés à la deuxième extrémité (12eh) et configurés pour coopérer avec un câble (15) ;
- des moyens de fixation (16) configurés pour attacher le câble (15) à un point d'appui fixe (P2), le câble (15) reliant la flèche (12) via les moyens d'accrochage (14) et le point d'appui fixe (P2) via les moyens de fixation (16).

## Patentansprüche

1. Verfahren zur Sicherung eines Geländes (T), **dadurch gekennzeichnet, dass** es die folgenden Schritte umfasst:
- Bereitstellen eines Turmdrehkrans (10), umfassend:
• einen Mast (11),
• einen Ausleger (12), der sich entlang einer Längsachse (D) erstreckt und ein erstes (12em) und ein zweites (12eh) Ende, die entlang der Längsachse (D) gegenüberliegend sind, aufweist, wobei der Ausleger (12) am Mast (11) an einem Verbindungspunkt (Pa), der proximal zum ersten Ende (12em) und distal zum zweiten Ende (12eh) ist, angeordnet ist,
• Querstangen (13), die am Ausleger (12) angebracht und zwischen dem ersten (12em) und dem zweiten (12eh) Ende verteilt angeordnet sind,
- Montieren des Turmdrehkrans (10) an einer ersten Seite (T1) des Geländes (T), dann Schwenken des Turmdrehkrans (10) derart, dass sich der Ausleger (12) über dem Gelände (T) erstreckt,
wobei das Verfahren **dadurch gekennzeichnet ist, dass** es umfasst:
- Abspannen des Auslegers (12) am zweiten Ende (12eh).

2. Verfahren nach Anspruch 1, **dadurch gekennzeichnet, dass** der Schritt des Abspannens darin besteht, den Ausleger (12) am zweiten Ende (12eh) mit einem festen Stützpunkt (P2), der an einer zweiten Seite (T2) des Geländes (T) angeordnet ist, über mindestens ein entspanntes Seil (15) zu verbinden.

3. Vorrichtung zur Sicherung eines Geländes (T), umfassend:
- einen Turmdrehkran (10), der mit einem Mast (11) und einem Ausleger (12) versehen ist, der sich entlang einer Längsachse (D) erstreckt und ein erstes (12em) und ein zweites (12eh) Ende, die entlang der Längsachse (D) gegenüberliegend sind, aufweist,
- Querstangen (13), die am Ausleger (12) angebracht sind,
wobei die Vorrichtung zur Sicherung **dadurch gekennzeichnet ist, dass** sie umfasst:
- Einhakmittel (14), die am zweiten Ende (12eh) angeordnet und konfiguriert sind, um mit einem Seil (15) zusammenzuwirken,
- Befestigungsmittel (16), die konfiguriert sind, um das Seil (15) an einem festen Stützpunkt (P2) zu befestigen, wobei das Seil (15) den Ausleger (12) über die Einhakmittel (14) und den festen Stützpunkt (P2) über die Befestigungsmittel (16) verbindet.

## Claims

1. Method for protecting a field (T), **characterized in that** it comprises the following steps:
- providing a tower crane (10) comprising:
• a mast (11);
• a jib (12) extending in a longitudinal direction (D) and comprising a first end (12em) and a second end (12eh) opposite one another in the longitudinal direction (D), the jib (12) being arranged on the mast (11) at the level of an assembly point (Pa) that is proximal with respect to the first end (12em) and distal with respect to the second end (12eh);
• transverse struts (13) fitted on the jib (12) and distributed between the first end (12em) and the second end (12eh);
- erecting the tower crane (10) on a first side (T1) of the field (T) and then pivoting the tower crane (10) so that the jib (12) extends above the field (T);
method **characterised in that** it comprises:
- guying the jib (12) at the level of the second end (12eh).

2. Method according to claim 1, **characterised in that** the guying step consists in connecting the jib (12) at the level of the second end (12eh) to a fixed anchoring point (P2) located on a second side (T2) of the field (T) by means of at least one slack cable (15).

3. Device for protecting a field (T), comprising:
- a tower crane (10) provided with a mast (11) and a jib (12) extending in a longitudinal direction (D) and comprising a first end (12em) and a second end (12eh) opposite one another in the longitudinal direction (D);
- transverse struts (13) fitted on the jib (12);
device for securing **characterised in that** it comprises:
- attachment means (14) arranged on the second end (12eh) and configured to collaborate with a cable (15);
- securing means (16) configured to attach the cable (15) to a fixed anchoring point (P2), the cable (15) connecting the jib (12) via the attachment means (14) and the fixed anchoring point (P2) via the securing means (16).
